# EUROPEAN PATENT SPECIFICATION

(11) **EP 4 228 928 B1**
(45) Date of publication and mention of the grant of the patent: **21.10.2026**
(21) Application number: 20956907.8
(22) Date of filing: 16.10.2020
(51) Int. Cl.: B60R 16/04, B62D 21/03, B62D 65/02

(54) **CHASSIS CROSSMEMBER WITH BATTERY SUPPORT**
FAHRWERKSQUERGLIED MIT BATTERIETRÄGER
TRAVERSE DE CHÂSSIS À SUPPORT DE BATTERIE

(43) Date of publication of application: 23.08.2023
(73) Proprietor: Volvo Truck Corporation, 405 08 Göteborg (SE)
(72) Inventor: ZARPELON, Fernando Luis, 81210-310 Curitiba PR (BR); GIOPPO, Jones George Kiatcoski, 82400-150 Curitiba PR (BR); ZONATTO, Eduardo, 80810-350 Curitiba PR (BR); GROSSL, Gilberto Schorr, 81230-170 Curitiba - PR (BR)
(74) Representative: Kransell & Wennborg KB
(86) International application number: PCT/BR2020/050419
(87) International publication number: WO 2022/077080

(56) References cited:
- EP-A2- 2 712 788
- EP-B1- 1 334 881
- WO-A1-2013/112397
- WO-A1-2020/160747
- CN-A- 108 725 358
- CN-U- 207 190 976
- CN-U- 207 190 976
- CN-U- 208 180 971
- CN-U- 208 180 971
- CN-U- 208 393 291
- CN-U- 210 478 604
- CN-U- 211 731 289
- CN-U- 212 073 946
- DE-A1- 102016 113 759
- US-A1- 2006 096 794
- US-A1- 2015 089 981

## Description

### FIELD OF THE INVENTION

The invention relates generally to a chassis crossmember. In particular aspects, the invention relates to a vehicle and a chassis crossmember with a battery support to mount a battery and increase a stiffness of a chassis of a vehicle.

### BACKGROUND

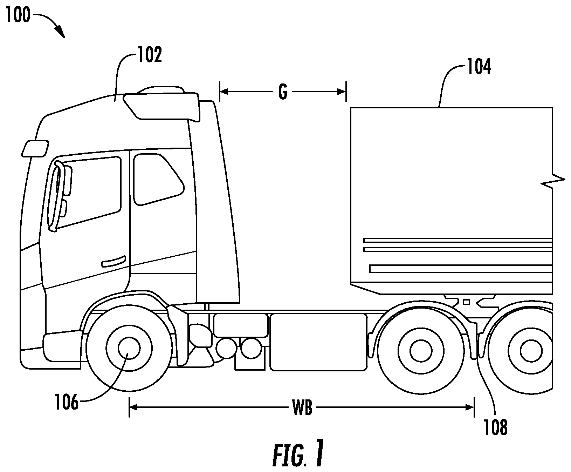

Certain jurisdictions (e.g., Brazil, Europe, etc.) limit truck loads and dimensions, such as front axle load and/or total truck length. As a result, many truck designs in such jurisdictions include a large gap between the cab and the trailer. For example, FIG. 1 illustrates a truck 100 with a gap G between the cab 102 and the trailer 104. The gap **G** is defined in part by a wheelbase WB between the front axle 106 and the center of a rear axle hub **108.** This gap **G** increases drag force, which decreases fuel efficiency. Accordingly, reducing this gap **G** (e.g., by 500 mm) would significantly reduce fuel consumption and associated costs. One way to reduce the gap **G** between the cab **102** and the trailer **104** is to reduce the wheelbase **WB** between the front axle **106** and the center of rear axle hub **108.** However, any such reduction requires a reconfiguration of truck components, preferably without reducing fuel capacity (by reducing the size of the fuel tank). Other chassis crossmembers, chassis crossmember assemblies, and vehicles incorporating the same are known. For example, CN 208180971 U discloses a chassis crossmember with a battery support mounting a vehicle battery, the battery support including a battery tray mounted by brackets to the vehicle chassis.

### SUMMARY

According to an aspect of the invention, a chassis crossmember includes a battery support configured to mount at least one vehicle battery to and increase a stiffness of a chassis of a vehicle. The battery support consists of a battery tray, including a floor, a front sidewall, and a rear sidewall. The battery tray is configured to extend between a left rail and a right rail of the chassis. The chassis crossmember further includes at least one left mounting bracket configured to rigidly mount a left side of the battery support to a left inner surface of the left rail of the chassis. The chassis crossmember further includes at least one right mounting bracket configured to rigidly mount a right side of the battery support to a right inner surface of the right rail of the chassis.

In certain embodiments, the battery support further includes side plates extending between the front sidewall and the rear sidewall.

In certain embodiments, at least one of the side plates includes a cable aperture to route a cable from an interior to an exterior of the battery support.

In certain embodiments, each of the side plates comprises a plurality of flanges that at least partially overlap to reinforce corners of the side plates.

In certain embodiments, the battery support further comprises a drainage hole in each bottom corner of the battery support.

In certain embodiments, the battery support further comprises a steppable cover removably attached to the battery tray.

In certain embodiments, the battery support is configured to support two vehicle batteries.

In certain embodiments, a height of the chassis crossmember is less than a height of the left and right rails of the chassis.

In certain embodiments, each of the at least one left mounting bracket, and the at least one right mounting bracket include a plurality of rivet holes extending linearly between a front and a back of the battery support.

In certain embodiments, the at least one left mounting bracket includes a lower left mounting bracket attached to a bottom of the battery support and an upper left mounting bracket attached to a top of the battery support. The at least one right mounting bracket includes a lower right mounting bracket attached to the bottom of the battery support and an upper right mounting bracket attached to the top of the battery support.

In certain embodiments, the lower left mounting bracket and the lower right mounting bracket each include at least one gusset.

In certain embodiments, the upper left mounting bracket and the upper right mounting bracket are each devoid of a gusset.

In certain embodiments, each of the lower right mounting bracket and the lower left mounting bracket further comprises a drainage hole in each corner.

According to another aspect of the invention, a chassis crossmember assembly includes a chassis crossmember, including a battery support configured to increase a stiffness of a chassis of a vehicle. The battery support consists of a battery tray, including a floor, a front sidewall, and a rear sidewall. The battery tray is configured to extend between a left rail and a right rail of the chassis. The chassis crossmember further includes at least one left mounting bracket configured to rigidly mount a left side of the battery support to a left inner surface of the left rail of the chassis. The chassis crossmember further includes at least one right mounting bracket configured to rigidly mount a right side of the battery support to a right inner surface of the right rail of the chassis. The chassis crossmember assembly further includes at least one vehicle battery installed on the battery support.

In certain embodiments, the chassis crossmember includes a battery hold down, removably fixing the at least one vehicle battery to the battery support.

In certain embodiments, the at least one vehicle battery comprises a first vehicle battery and a second vehicle battery, each of the first vehicle battery and the second vehicle battery having a rectangular shape with two long sidewalls and two short sidewalls. One of the two long sidewalls of the first vehicle battery is positioned adjacent to one of the two long sidewalls of the second vehicle battery.

According to another aspect of the invention, a vehicle includes a chassis including a left rail and a right rail. The vehicle further includes a chassis crossmember, including a battery support configured to increase a stiffness of the chassis. The battery support includes a battery tray, including a floor, a front sidewall, and a rear sidewall. The battery tray is configured to extend between the left rail and the right rail of the chassis. The chassis crossmember further includes at least one left mounting bracket configured to rigidly mount a left side of the battery support to a left inner surface of the left rail of the chassis. The chassis crossmember further includes at least one right mounting bracket configured to rigidly mount a right side of the battery support to a right inner surface of the right rail of the chassis. The vehicle further includes at least one vehicle battery installed on the battery support.

In certain embodiments, the chassis crossmember is positioned between a gearbox and a fifth wheel of the vehicle.

In certain embodiments, the chassis crossmember is positioned between a gearbox and a differential of the vehicle.

In certain embodiments, the vehicle further includes an electronic brake system module mounted to the battery support.

Additional features and advantages will be set forth in the detailed description which follows, and in part will be readily apparent from that description to those skilled in the art or recognized by practicing the embodiments as described herein, including the detailed description which follows, the claims, as well as the appended drawings.

It is to be understood that both the foregoing general description and the following detailed description are merely exemplary and are intended to provide an overview or framework for understanding the nature and character of the claims. The accompanying drawings are included to provide a further understanding and are incorporated in and constitute a part of this specification. The drawings illustrate one or more embodiment(s), and together with the description, serve to explain the principles and operation of the various embodiments.

### BRIEF DESCRIPTION OF THE DRAWINGS

The accompanying drawing figures incorporated in and forming a part of this specification illustrate several aspects of the invention, and together with the description, serve to explain the principles of the invention.
FIG. 1 is a side view of a truck illustrating a gap between a cab and trailer of the truck;
FIG. 2 is a perspective view of a chassis crossmember attached to chassis rails;
FIG. 3 is a perspective view of a chassis crossmember assembly attached to chassis rails;
FIG. 4A is a perspective view of the chassis crossmember assembly of FIG. 3;
FIG. 4B is a perspective view of the chassis crossmember assembly of FIG. 4A with a cover removed;
FIG. 5 is a perspective view of the battery tray and mounting brackets of the chassis crossmember assembly of FIG. 4A;
FIG. 6A is a side view of lower mounting brackets of the chassis crossmember assembly of FIG. 4A fixed to chassis rails;
FIG. 6B is a side view of a body of the chassis crossmember assembly of FIG. 4A fixed to the lower mounting brackets;
FIG. 6C is a side view of upper mounting brackets of the chassis crossmember assembly of FIG. 4A fixed to chassis rails;
FIG. 7 is a cross-sectional front view of the chassis crossmember assembly of FIG. 4A mounted to chassis rails;
FIG. 8 is a perspective view of a contour plot illustrating maximum stress of the chassis crossmember assembly when subjected to various loads;
FIG. 9 is a perspective view of a truck with a chassis crossmember attached to chassis rails;
FIG. 10A is a perspective view of a truck with a chassis crossmember assembly with battery support attached to chassis rails;
FIG. 10B is a top view of the chassis crossmember assembly of the truck of FIG. 10A; and
FIG. 10C is a close-up perspective view of the chassis crossmember assembly of the truck of FIG. 10A.

### DETAILED DESCRIPTION

The embodiments set forth below represent the necessary information to enable those skilled in the art to practice the embodiments and illustrate the best mode of practicing the embodiments. Upon reading the following description in light of the accompanying drawing figures, those skilled in the art will understand the concepts of the invention

It will be understood that, although the terms first, second, etc. may be used herein to describe various elements, these elements should not be limited by these terms. These terms are only used to distinguish one element from another. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

Relative terms such as "below" or "above" or "upper" or "lower" or "horizontal" or "vertical" may be used herein to describe a relationship of one element, layer, or region to another element, layer, or region as illustrated in the Figures. It will be understood that these terms and those discussed above are intended to encompass different orientations of the device in addition to the orientation depicted in the Figures.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning consistent with their meaning in the context of this specification and the relevant art and will not be interpreted in an idealized or overly formal sense unless expressly so defined herein.

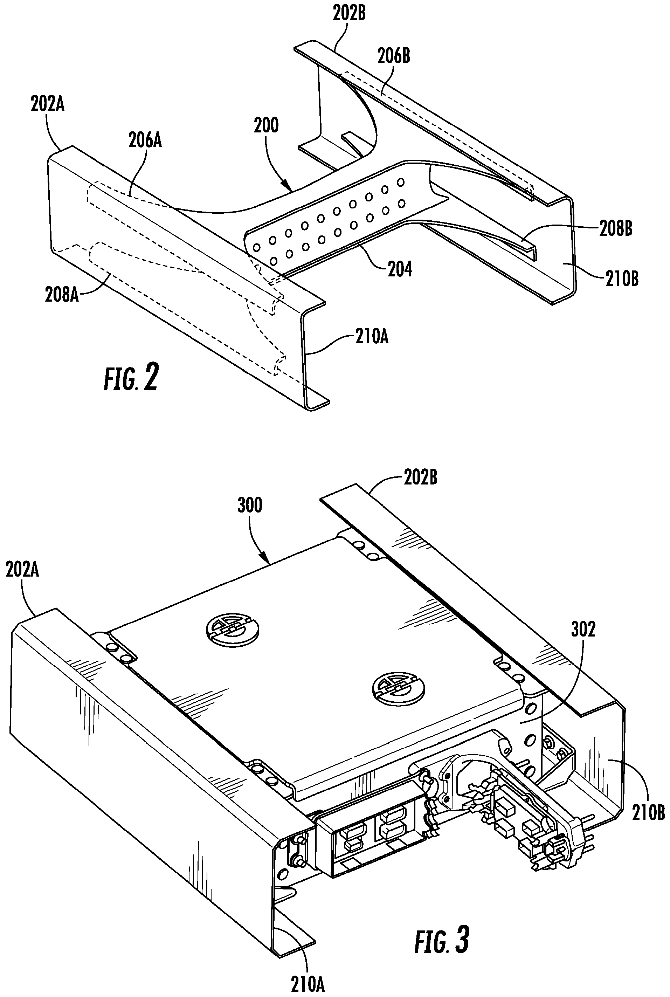

**FIG.** 2 is a perspective view of a chassis crossmember 200 attached to chassis rails **202A, 202B.** The chassis crossmember 200 includes a body 204 generally extending perpendicularly between the left chassis rail **202A** and the right chassis rail **202B** (may be referred to generally as chassis rails 202). Further, the body 204 is rigidly attached to the chassis rails 202 by upper brackets **206A, 206B,** and lower brackets **208A, 208B.** In particular, left upper bracket **206A** and left lower bracket **208A** are attached to a left inner surface **210A** of the left chassis rail **202A,** and right upper bracket **206B** and right lower bracket **208B** are attached to a right inner surface **210B** of the right chassis rail **202B.** Accordingly, the chassis crossmember 200 is rigidly attached to the chassis rails 202 to increase a stiffness of a chassis of a vehicle.

**FIG.** 3 is a perspective view of a chassis crossmember assembly 300 attached to chassis rails **202A, 202B.** The chassis crossmember assembly 300 includes a chassis crossmember 302 configured to support a battery and increase a stiffness of a chassis of a vehicle (e.g., truck). The chassis crossmember 302 generally extends perpendicularly between and is rigidly attached to the left chassis rail **202A** and the right chassis rail **202B.** The chassis crossmember 302 is attached to a left inner surface **210A** of the left chassis rail **202A,** and the right inner surface **210B** of the right chassis rail **202B.** Accordingly, the chassis crossmember 302 is rigidly attached to the chassis rails 202 to increase a stiffness of a chassis of a vehicle, while also supporting and/or housing a battery. In certain embodiments, a height of the chassis crossmember 302 is less than a height of the chassis rails **202A, 202B.**

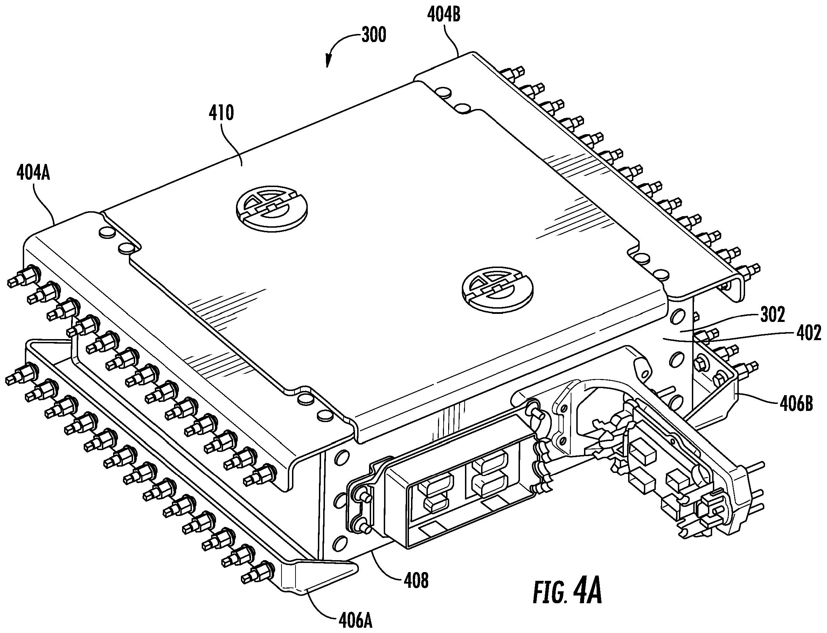

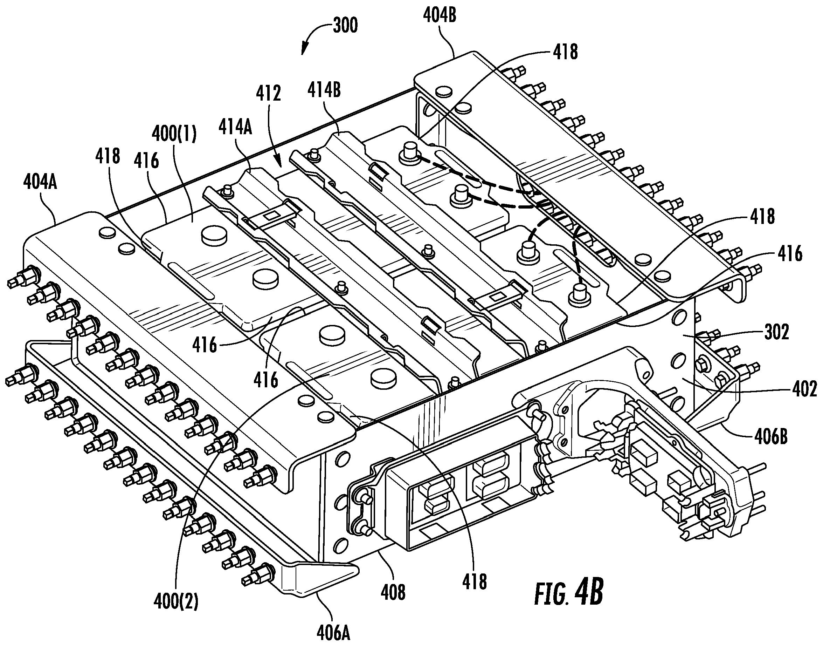

**FIGS. 4A-4B** are views of the chassis crossmember assembly **300** of FIG. 3. The chassis crossmember assembly 300 includes the chassis crossmember 302 and vehicle batteries **400(1), 400(2)** (may be referred to as vehicle batteries 400). The chassis crossmember 302 includes a battery support 402 configured to increase a stiffness of a chassis of a vehicle (e.g., truck), and mounting brackets **404A-406B** to attach the chassis crossmember **302** to the chassis rails 202. In particular, the chassis crossmember 302 includes an upper left mounting bracket **404A** and/or a lower left mounting bracket **406A,** which are configured to rigidly mount a left side of the battery support 402 to a left inner surface **210A** of the left chassis rail **202A** of the chassis. The chassis crossmember 302 further includes an upper right mounting bracket **404B** and/or a lower right mounting bracket **406B,** configured to rigidly mount a right side of the battery support 402 to a right inner surface **210B** of the right chassis rail **202B** of the chassis.

In certain embodiments, the battery support 402 includes a battery tray 408 and a steppable cover 410 removably attached to the battery tray 408. The battery tray 408 is configured to extend between a left rail **202A** and a right rail **202B** of the chassis. The battery tray 408 and steppable cover 410 define an interior 412 with the vehicle batteries 400 mounted and housed therein. In this way, the vehicle batteries 400 are protected from the environment, and the battery support 402 may be stood on by a user without damaging the vehicle batteries 400.

The vehicle batteries 400 include a first vehicle battery **400(1)** and a second vehicle battery **400(2),** although in certain embodiments, more or fewer vehicle batteries 400 may be used. The vehicle batteries 400 are installed on the battery support 402. In particular, the chassis crossmember 302 includes battery hold downs **414A, 414B** removably fixing the vehicle batteries 400 to the battery support 402. Each of the first vehicle battery **400(1)** and the second vehicle battery **400(2)** have a rectangular shape with two long sidewalls 416 and two short sidewalls 418. One of the two long sidewalls 416 of the first vehicle battery **400(1)** is positioned adjacent to one of the two long sidewalls 416 of the second vehicle battery 400(2). The battery hold downs **414A, 414B** (between a front and back of the battery support 402) extend across a width of both the vehicle batteries 400.

In certain embodiments, the chassis crossmember assembly 300 includes an electronic brake system (EBS) module 420 mounted to a rear side of the battery support 402. Such a configuration maintains the position of the EBS module 420 relative to the chassis crossmember 200, which facilitates retroactive integration of the chassis crossmember assembly 300 into existing truck configurations. In other embodiments, additional and/or alternative modules may be mounted to the chassis crossmember assembly 300.

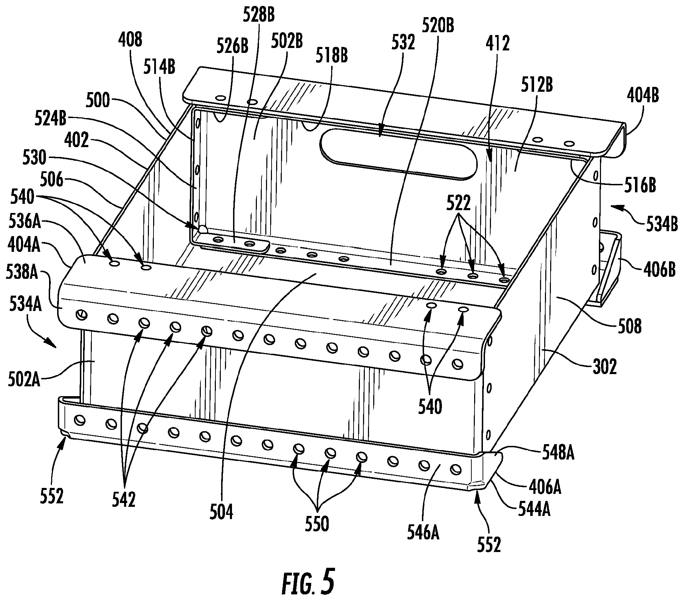

**FIG.** 5 is a perspective view of the battery tray 408 and mounting brackets **404A-406B** of the chassis crossmember assembly **300 of** **FIG.** 4A. The battery tray 408 includes a center portion 500, left side plate **502A,** and/or right side plate **502B.** The center portion 500 includes a floor 504, a front sidewall 506, and a rear sidewall 508. In certain embodiments, the front sidewall 506, and the rear sidewall 508 are integrally connected to the floor 504. The side plates **502A, 502B** (may be referred to generally as side plate 502) extend between the front sidewall 506 and the rear sidewall 508. In certain embodiments, the battery tray 408 includes the center portion 500 but not the side plates 502.

Right side plate **502B** includes a plate body **512B** with a front flange **514B** extending generally perpendicularly from a front edge of the plate body **512B,** a rear flange **516B** extending generally perpendicularly from a rear edge of the plate body **512B,** an upper flange **518B** extending generally perpendicularly from an upper edge of the plate body **512B,** and/or a lower flange **520B** extending generally perpendicularly from a lower edge of the plate body **512B.** Each of the flanges **514B, 516B, 518B, 520B,** includes a plurality of holes 522 for fastening the right side plate **502B** to the center portion 500. The front flange **514B** includes a non-overlap portion **524B,** an upper overlap portion **526B,** and a lower overlap portion **528B.** In particular, the lower overlap portion **528B** is at a generally perpendicular angle relative to the non-overlap portion **524B.** The plate body **512B,** non-overlap portion **524B,** and lower overlap portion **528B** form a drainage hole 530. The overlaps reinforce corners of the battery support 402, thereby providing further strength and rigidity to the battery support 402.

The upper overlap portion **526B** includes a similar configuration as the lower overlap portion **528B.** Further, the rear flange **516B** includes a similar configuration as the front flange **514B.** Still, further, the left side plate **502A** includes a similar configuration as the right side plate **502B.** Accordingly, the battery support 402 includes a drainage hole 530 in each bottom corner of the battery support 402. These drainage holes 530 prevent the accumulation of dust, debris, water, etc. within an interior 412 of the battery support 402.

In certain embodiments, the right side plate **502B** includes a cable aperture 532 to route one or more cables from an interior 412 to an exterior of the battery support 402. In particular, one or more cables may be routed from the vehicle batteries 400 within the interior 412 of the battery support 402 to an exterior of the battery support 402.

As noted above, the chassis crossmember assembly 300 includes the upper left mounting bracket **404A** and/or a lower left mounting bracket 406A. The lower left mounting bracket **406A,** and lower right mounting bracket **406B** are attached to a bottom of the battery support 402. The upper left mounting bracket **404A** and upper right mounting bracket **404B** are attached to a top of the battery support 402.

The upper left mounting bracket **404A** is spaced from the lower left mounting bracket **406A** to provide a mounting gap **534A** therebetween, and the upper right mounting bracket **404B** is spaced from the lower right mounting bracket **406B** to provide a mounting gap **534B** therebetween. These mounting gaps **534A, 534B** provides space for other components that may be mounted or positioned at the interior surface or exterior surface of the chassis rails 202.

The upper left mounting bracket **404A** includes a horizontal portion **536A** and a vertical portion 538A. The horizontal portion **536A** includes holes 540 configured to align with holes 522 of the upper left flange **518A** and/or overlap portions **526A** of the flanges **514A, 516A** (e.g., see discussion above of upper right flange 518B). The vertical portion **538A** includes a plurality of rivet holes 542 extending linearly between a front and back of the battery support 402 for mounting the upper left mounting bracket **404A** to the left chassis rail 202A. In certain embodiments, the vertical portion **538A** includes more than ten rivet holes 542 (e.g., thirteen rivet holes 542). Further, the upper left mounting bracket **404A** is devoid of a gusset to facilitate assembly of the upper left mounting bracket **404A** to the left chassis rail **202A** (as discussed in more detail below).

The lower left mounting bracket **406A** includes a horizontal portion **544A,** a vertical portion **546A,** and front and rear gussets **548A** therebetween. Similar to the upper left mounting bracket **404A,** the horizontal portion **544A** includes holes that are configured to align with holes 522 of the lower left flange **520A** and/or overlap portions **528A** of the flanges **514A, 516A** (e.g., see discussion above of upper right flange 518B). The vertical portion **546A** includes a plurality of rivet holes 550 extending linearly between a front and back of the battery support 402 for mounting the lower left mounting bracket **406A** to the left chassis rail 202A. In certain embodiments, the vertical portion **546A** includes more than ten rivet holes 550 (e.g., thirteen rivet holes 550). The lower left mounting bracket **406A** includes gussets **548A** to increase rigidity and support of the lower left mounting bracket **406A** as most of the weight of the battery support 402 is carried by the lower mounting brackets **406A, 406B.** Further, in certain embodiments, the lower left mounting bracket **406A** includes drainage holes 552 in front and rear corners defined by the horizontal portion **544A,** vertical portion **546A,** and gusset 548A. These drainage holes 552 prevent the accumulation of dust, debris, water, etc. within the lower left mounting bracket 406A. It is noted that a drainage path is formed from the interior 412 through drainage hole 530 onto the lower mounting bracket **406A** and then through drainage hole 552.

The upper right mounting bracket **404B** includes a similar configuration as the upper left mounting bracket **404A,** and/or the lower right mounting bracket **406B** includes a similar configuration as the lower left mounting bracket 406A.

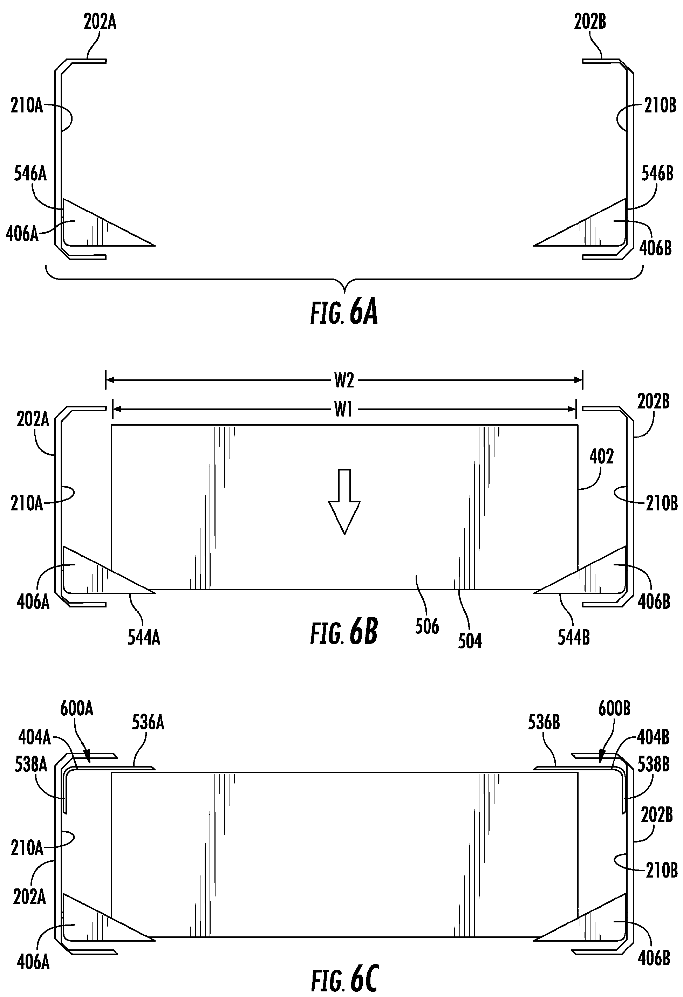

**FIGS. 6A-6C** are views of mounting the chassis crossmember assembly 300 to chassis rails 202. Referring to FIG. 6A, the left lower mounting bracket **406A,** is attached to the left inner surface **210A** of the left chassis rail 202A. In particular, the vertical portion **546A** of the left lower mounting bracket **406A** is attached to the left inner surface 210A. Similarly, the right lower mounting bracket **406B** is attached to the right inner surface **210B** of the right chassis rail **202B.** In particular, the vertical portion **546B** of the right lower mounting bracket **406B** is attached to the right inner surface **210B.**

Referring to **FIG. 6B****,** the battery support 402 is dropped between the chassis rails 202 onto the left and right lower mounting brackets **406A, 406B.** In particular, the floor 504 of the center portion 500 of the battery tray 408 of the battery support 402 contacts and is attached to the horizontal portions **544A, 544B** of the left and right lower mounting brackets 406A, 406B. In certain embodiments, the width W1 of the battery support 402 is less than a width W2 of a gap between the chassis rails 202 to vertically move the battery support 402 between the chassis rails 202.

Referring to **FIG. 6C****,** left and right upper mounting brackets **404A** are attached to the chassis rails 202 and the battery support 402. In particular, the horizontal portion **536A** of the left upper mounting bracket **404A** is fed between an angled gap **600A** (e.g., L-shaped gap) defined between the left chassis rail **202A** and the battery support 402. The vertical portion **538A** of the left upper mounting bracket **404A** is attached to the interior surface **210A** of the left chassis rail 202A. The horizontal portion **536A** of the left upper mounting bracket **404A** is attached to the top of the battery support 402. Similarly, the horizontal portion **536B** of the right upper mounting bracket **404B** is fed between an angled gap **600B** (e.g., L-shaped gap) defined between the right chassis rail **202B** and the battery support 402. The vertical portion **538B** of the right upper mounting bracket **404B** is attached to the interior surface **210B** of the right chassis rail **202B.** The horizontal portion **536B** of the right upper mounting bracket **404B** is attached to the top of the battery support 402.

It is noted that the left and right upper mounting brackets **404A, 404B** are devoid of gussets, which facilitates positioning of the left and right upper mounting brackets **404A, 404B** between the battery support 402 and the chassis rails 202.

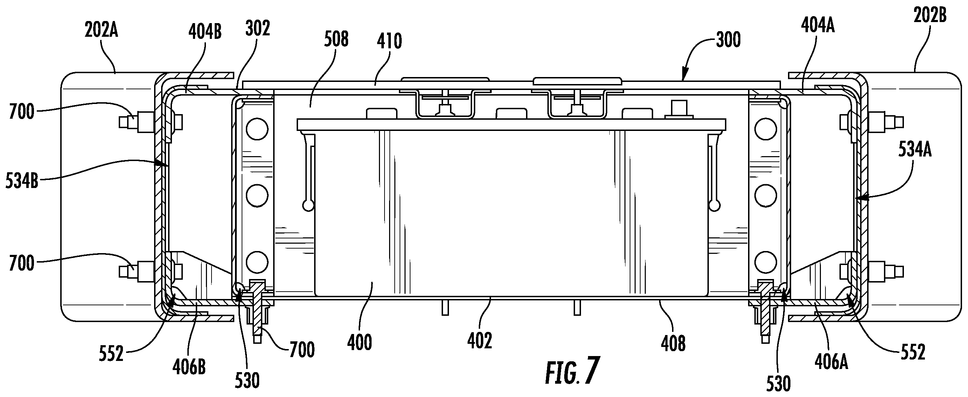

**FIG.** 7 is a cross-sectional front view of the chassis crossmember assembly **300 of** **FIG. 4A** mounted to chassis rails 202. The chassis crossmember assembly 300 includes a chassis crossmember 302 mounted to chassis rails 202 and vehicle batteries 400 housed within the chassis crossmember 302. In particular, the battery support 402 of the chassis crossmember 302 is mounted to the chassis rails 202 by the mounting brackets **404A-406B** and rivets 700 and extends between the left chassis rail **202A** and the right chassis rail **202B.** The rigid attachment of the battery support 402 to the chassis rails 202 and/or vertical orientation of the front sidewall 506 (see, e.g., FIG. 5) and rear sidewall 508 increases a stiffness of the chassis. As shown, mounting gaps **534A, 534B** provide space for other components that may be mounted or positioned at the interior surface or exterior surface of the chassis rails 202.

In certain embodiments, the vehicle batteries 400 are rigidly mounted to and held within the battery support 402. In particular, vehicle batteries 400 are mounted to the battery tray 408 by battery hold downs **414A, 414B** and contained within the battery tray 408 by steppable cover 410. Drainage holes 530 prevent the accumulation of dust, debris, water, etc. within an interior of the battery support 402, and/or drainage holes 552 prevent the accumulation of dust, debris, water, etc. within the lower mounting brackets **406A, 406B.** In certain embodiments, drainage holes **530, 552** prevent stress concentration in the corners.

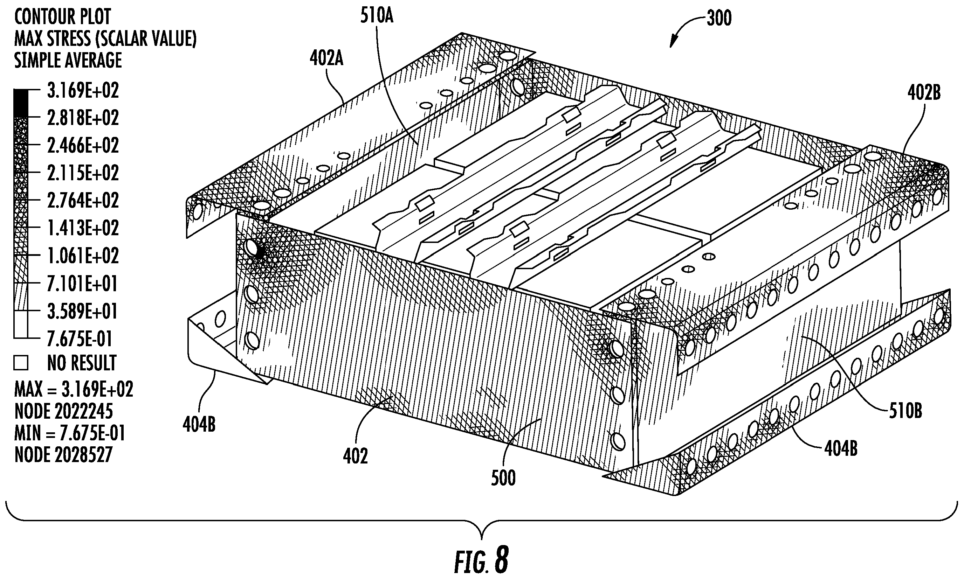

**FIG.** 8 is a perspective view of a contour plot illustrating the maximum stress of the chassis crossmember assembly 300 when subjected to various loads (e.g., torsion, acceleration, etc.) during an endurance test. In certain embodiments, the chassis crossmember assembly 300 is configured for similar stress loads and stiffness as the chassis crossmember 200 (see, e.g., FIG. 2). In certain embodiments, the chassis crossmember assembly 300 is configured for a maximum stress value of 316.9 MPa. In other embodiments, the chassis crossmember assembly 300 is configured for a maximum stress value of 350 MPa. In other embodiments, the chassis crossmember assembly 300 is configured for a maximum stress value of 400 MPa.

In certain embodiments, the battery tray 402 (e.g., center portion 500, left side plate **502A,** and/or right side plate **502B** include 4mm, grade 50, 380 MPa yield structural steel. In certain embodiments, the upper mounting brackets **404A, 404B** and/or lower mounting brackets **406A, 406B** include 7mm, Grade 70, 500 MPa yield structural steel.

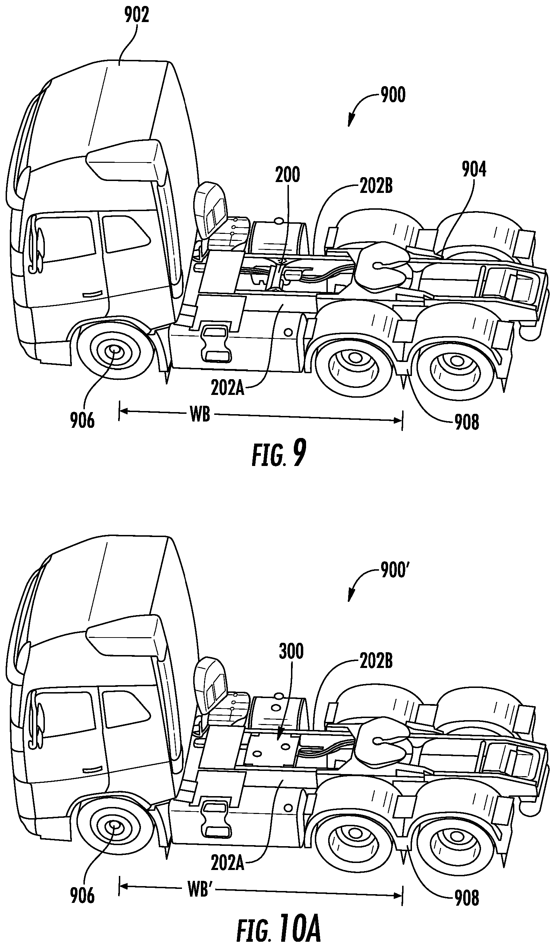

**FIG.** 9 is a perspective view of a truck 900 with a chassis crossmember 200 attached to chassis rails 202. In particular, the truck 900 includes a cab 902 and a chassis 904. The chassis 904 includes the chassis rails 202 with the chassis crossmember 200 extending therebetween. The truck 900 includes a wheelbase WB defined between the front axle 906 and the center of rear axle hub 908.

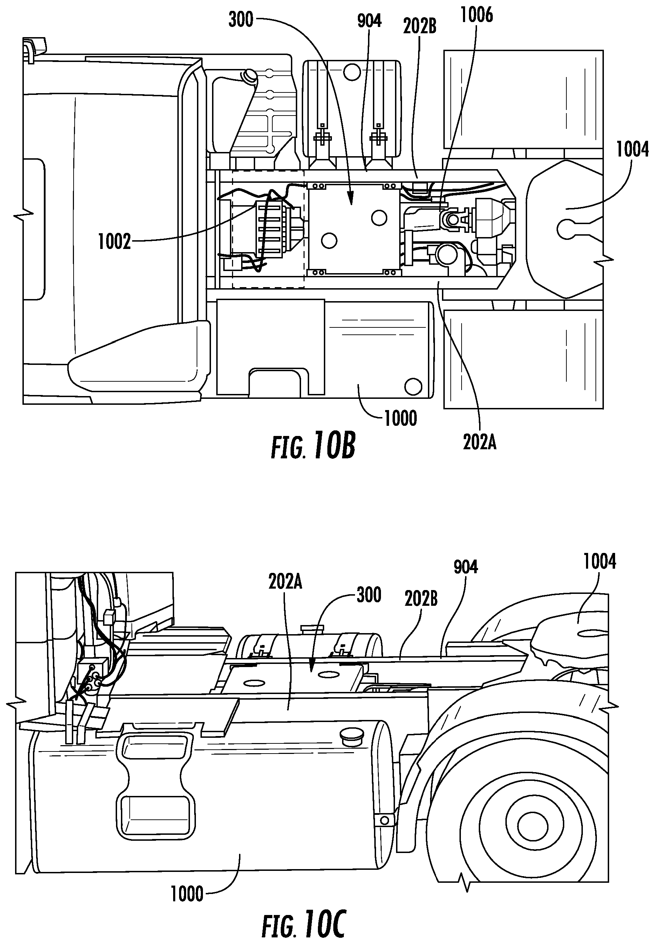

**FIGS. 10A-10C** are views of a truck 900' with a chassis crossmember assembly 300 with a battery support 402 attached to and extending between the chassis rails 202. Referring to **FIG. 10A****,** as illustrated, the chassis crossmember assembly 300 is configured to replace the chassis crossmember 200. As a result, the wheelbase WB' between the front axle 906 and the center of rear axle hub 908 is reduced relative to the truck 900 of FIG. 9 and without needing to reduce the size of the fuel tank 1000. As noted above, such a configuration reduces the gap between the cab 902 and a trailer (not shown), thereby reducing drag force and/or increasing fuel efficiency. It is noted that although a truck 900' is illustrated, the chassis crossmember assembly 300 may be used in other types of vehicles.

Referring to FIGS. 10B-10C, the chassis crossmember assembly 300 (including the chassis crossmember 302) is positioned between the left chassis rail 202A and the right chassis rail 202B, between a top and bottom of the chassis rails 202, and between a gearbox 1002 and a fifth wheel 1004 of the truck 900'. In certain embodiments, the chassis crossmember assembly (including the chassis crossmember 302) is positioned between the gearbox 1002 and the differential 1006 of the truck 900'. The position of the chassis crossmember assembly 300 is advantageous in reducing accelerations on the vehicle batteries 400, especially compared to the extremities of the chassis 904 (e.g., the front and rear of the chassis 904). For example, accelerations are greater at the back of the truck 900'. Positioning the chassis crossmember assembly 300 in a center of the chassis 904 instead of the rear of the chassis reduces the accelerations on the vehicle batteries 400, which may improve battery performance and/or reduce battery failure. As a result, the chassis crossmember assembly 300 is devoid of cushioning for the vehicle batteries 400, as such cushioning is not required to reduce vibrations and/or accelerations.

It is noted that the EBS module 420 is mounted to the rear sidewall 508 of the battery tray 408 to maintain the EBS module 420 in the same position as that of the truck 900 of FIG. 9. Additional and/or alternative components could also be mounted to the battery tray 408.

## Claims

1. A chassis crossmember (302), comprising:
a battery support (402) configured to mount at least one vehicle battery (400, 400(1), 400(2)) to and increase a stiffness of a chassis (904) of a vehicle, the battery support (402) comprising a battery tray (408) including a floor (504), a front sidewall (506), a rear sidewall (508), and side plates (502A, 502B) extending between the front sidewall (506) and the rear sidewall (508), the battery tray (408) configured to extend between a left rail (202A) and a right rail (202B) of the chassis (904);
a lower left mounting bracket (406A) and an upper left mounting bracket (404A) each configured to rigidly mount a left side of the battery support (402) to a left inner surface (210A) of the left rail (202A) of the chassis (904), wherein the lower left mounting bracket (406A) is attached to a bottom of the battery support (402) and the upper left mounting bracket (404A) is attached to a top of the battery support (402);
a lower right mounting bracket (406B) and an upper right mounting bracket (404B) each configured to rigidly mount a right side of the battery support (402) to a right inner surface (210B) of the right rail (202B) of the chassis (904), wherein the lower right mounting bracket (406B) is attached to the bottom of the battery support (402) and the upper right mounting bracket (404B) is attached to a top of the battery support (402); and
a steppable cover (410) removably attached to the battery tray (408), the steppable cover (410) being accessible in use when the battery support (402) is mounted to the chassis (904) and being configured to be stood on by a user without damaging the at least one vehicle battery (400, 400(1), 400(2)) when present within the battery tray (408).

2. The chassis crossmember (302) of claim 1, wherein at least one of the side plates (502A, 502B) includes a cable aperture (532) to route a cable from an interior (412) to an exterior of the battery support (402).

3. The chassis crossmember (302) of claim 1, wherein each side plate (502A, 502B) of the side plates (502A, 502B) comprises a plurality of flanges (514B, 516B, 518B, 520B) that at least partially overlap to reinforce corners of the side plates (502A, 502B).

4. The chassis crossmember (302) of claim 1, wherein the battery support (402) further comprises a drainage hole (530) in each corner of the bottom of the battery support (402).

5. The chassis crossmember (302) of claim 1, wherein a height of the chassis crossmember (302) is less than a height of the left and right rails (202A, 202B) of the chassis (904).

6. The chassis crossmember (302) of claim 1, wherein the upper left mounting bracket (404A), the lower left mounting bracket (406A), the upper right mounting bracket (404B), and the lower right mounting bracket (406B) each include a plurality of rivet holes (542, 550) extending linearly between a front and a back of the battery support (402); and
wherein the upper left mounting bracket (404A), the lower left mounting bracket (406A), the upper right mounting bracket (404B), and the lower right mounting bracket (406B) each extend along substantially an entire length of the side plates between the front and back of the battery support (402).

7. The chassis crossmember (302) of claim 1, wherein the lower left mounting bracket (406A) and the lower right mounting bracket (406B) each include at least one gusset (548A, 548B).

8. The chassis crossmember (302) of claim 1, wherein each of the lower right mounting bracket (406B) and the lower left mounting bracket (406A) further comprises a drainage hole (552) in each corner.

9. A chassis crossmember assembly (300) comprising the chassis crossmember (302) according to claim 1, wherein:
at least one vehicle battery (400, 400(1), 400(2)) is installed on the battery support (402); and
wherein the chassis crossmember (302) further comprises a battery hold down (414A, 414B) removably fixing the at least one vehicle battery (400, 400(1), 400(2)) to the battery support (402).

10. The chassis crossmember assembly (300) of claim 9,
wherein the at least one vehicle battery (400, 400(1), 400(2)) comprises a first vehicle battery (400(1)) and a second vehicle battery (400(2)), each vehicle battery (400(1), 400(2)) of the first vehicle battery (400(1)) and the second vehicle battery (400(2)) has a rectangular shape with two long sidewalls (416) and two short sidewalls (418); and
wherein one of the two long sidewalls (416) of the first vehicle battery (400(1)) is positioned adjacent to one of the two long sidewalls (416) of the second vehicle battery (400(2)).

11. A vehicle (900, 900') comprising a chassis crossmember (302) according to claim 1 and a chassis (904) that comprises a left rail (202A) and a right rail (202B), wherein:
at least one vehicle battery (400, 400(1), 400(2)) is installed on the battery support (402); and
wherein the chassis crossmember (302) is positioned between a gearbox (1002) and a differential (1006) of the vehicle (900, 900').

12. The vehicle (900, 900') of claim 11, wherein the chassis crossmember (302) is positioned between a gearbox (1002) and a fifth wheel (1004) of the vehicle (900, 900').

13. The vehicle of claim 11, further comprising an electronic brake system module (420) mounted to the battery support (402).

14. The chassis crossmember of claim 1, wherein the upper left mounting bracket (404A), the lower left mounting bracket (406A), the upper right mounting bracket (404B), and the lower right mounting bracket (406B) are each configured to be at least partially positioned between an outer surface of the battery support (402) and the chassis (904) to rigidly mount the battery support (402) thereto.

## Patentansprüche

1. Fahrgestellquerträger (302), umfassend:
einen Batteriehalter (402), der dazu konfiguriert ist, mindestens eine Fahrzeugbatterie (400, 400(1), 400(2)) zu montieren und die Steifigkeit eines Fahrgestells (904) eines Fahrzeugs zu erhöhen, wobei der Batteriehalter (402) ein Batteriefach (408) umfasst, das einen Boden (504), eine vordere Seitenwand (506), eine hintere Seitenwand (508) und Seitenplatten (502A, 502B) enthält, die sich zwischen der vorderen Seitenwand (506) und der hinteren Seitenwand (508) erstrecken, wobei das Batteriefach (408) dazu konfiguriert ist, sich zwischen einer linken Schiene (202A) und einer rechten Schiene (202B) des Fahrgestells (904) zu erstrecken;
eine untere linke Montagehalterung (406A) und eine obere linke Montagehalterung (404A), die jeweils dazu konfiguriert sind, eine linke Seite des Batteriehalters (402) fest an einer linken Innenfläche (210A) der linken Schiene (202A) des Fahrgestells (904) zu montieren, wobei die untere linke Montagehalterung (406A) an einer Unterseite des Batteriehalters (402) angebracht ist und die obere linke Montagehalterung (404A) an einer Oberseite des Batteriehalters (402) angebracht ist;
eine untere rechte Montagehalterung (406B) und eine obere rechte Montagehalterung (404B), die jeweils dazu konfiguriert sind, eine rechte Seite des Batteriehalters (402) fest an einer rechten Innenfläche (210B) der rechten Schiene (202B) des Fahrgestells (904) zu montieren, wobei die untere rechte Montagehalterung (406B) an der Unterseite des Batteriehalters (402) angebracht ist und die obere rechte Montagehalterung (404B) an der Oberseite des Batteriehalters (402) angebracht ist; und
eine begehbare Abdeckung (410), die abnehmbar am Batteriefach (408) angebracht ist, wobei die begehbare Abdeckung (410) im Betrieb zugänglich ist, wenn der Batteriehalter (402) am Fahrgestell (904) montiert ist, und die so konfiguriert ist, dass ein Benutzer auf ihr stehen kann, ohne dass die mindestens eine Fahrzeugbatterie (400, 400(1), 400(2)) beschädigt wird, wenn diese sich innerhalb des Batteriefachs (408) befindet.

2. Fahrgestellquerträger (302) nach Anspruch 1, wobei mindestens eine der Seitenplatten (502A, 502B) eine Kabelöffnung (532) enthält, um ein Kabel vom Innenraum (412) zur Außenseite des Batteriehalters (402) zu führen.

3. Fahrgestellquerträger (302) nach Anspruch 1, wobei jede Seitenplatte (502A, 502B) der Seitenplatten (502A, 502B) eine Vielzahl von Flanschen (514B, 516B, 518B, 520B) umfasst, die sich mindestens teilweise überlappen, um die Ecken der Seitenplatten (502A, 502B) zu verstärken.

4. Fahrgestellquerträger (302) nach Anspruch 1, wobei der Batteriehalter (402) ferner in jeder Ecke der Unterseite des Batteriehalters (402) ein Abflussloch (530) umfasst.

5. Fahrgestellquerträger (302) nach Anspruch 1, wobei die Höhe des Fahrgestellquerträgers (302) geringer ist als die Höhe der linken und der rechten Schiene (202A, 202B) des Fahrgestells (904).

6. Fahrgestellquerträger (302) nach Anspruch 1, wobei die obere linke Montagehalterung (404A), die untere linke Montagehalterung (406A), die obere rechte Montagehalterung (404B) und die untere rechte Montagehalterung (406B) jeweils eine Vielzahl von Nietlöchern (542, 550) enthalten, die sich linear zwischen einer Vorderseite und einer Rückseite des Batteriehalters (402) erstrecken; und
wobei sich die obere linke Montagehalterung (404A), die untere linke Montagehalterung (406A), die obere rechte Montagehalterung (404B) und die untere rechte Montagehalterung (406B) jeweils im Wesentlichen über die gesamte Länge der Seitenplatten zwischen der Vorderseite und der Rückseite des Batteriehalters (402) erstrecken.

7. Fahrgestellquerträger (302) nach Anspruch 1, wobei die untere linke Montagehalterung (406A) und die untere rechte Montagehalterung (406B) jeweils mindestens eine Eckversteifung (548A, 548B) enthalten.

8. Fahrgestellquerträger (302) nach Anspruch 1, wobei jede der unteren rechten Montagehalterung (406B) und der unteren linken Montagehalterung (406A) ferner jeweils an jeder Ecke ein Abflussloch (552) umfasst.

9. Fahrgestellquerträgerbaugruppe (300), die den Fahrgestellquerträger (302) nach Anspruch 1 umfasst, wobei:
mindestens eine Fahrzeugbatterie (400, 400(1), 400(2)) auf dem Batteriehalter (402) installiert ist; und
wobei der Fahrgestellquerträger (302) ferner eine Batteriebefestigung (414A, 414B) umfasst, die die mindestens eine Fahrzeugbatterie (400, 400(1), 400(2)) lösbar an dem Batteriehalter (402) befestigt.

10. Fahrgestellquerträgerbaugruppe (300) nach Anspruch 9,
wobei die mindestens eine Fahrzeugbatterie (400, 400(1), 400(2)) eine erste Fahrzeugbatterie (400(1)) und eine zweite Fahrzeugbatterie (400(2)) umfasst, wobei jede Fahrzeugbatterie (400(1), 400(2)) der ersten Fahrzeugbatterie (400(1)) und der zweiten Fahrzeugbatterie (400(2)) eine rechteckige Form mit zwei langen Seitenwänden (416) und zwei kurzen Seitenwänden (418) aufweist; und
wobei eine der beiden langen Seitenwände (416) der ersten Fahrzeugbatterie (400(1)) benachbart zu einer der beiden langen Seitenwände (416) der zweiten Fahrzeugbatterie (400(2)) positioniert ist.

11. Fahrzeug (900, 900'), das einen Fahrgestellquerträger (302) nach Anspruch 1 und ein Fahrgestell (904) umfasst, das eine linke Schiene (202A) und eine rechte Schiene (202B) umfasst, wobei:
mindestens eine Fahrzeugbatterie (400, 400(1), 400(2)) auf dem Batteriehalter (402) installiert ist; und
wobei der Fahrgestellquerträger (302) zwischen einem Getriebe (1002) und einem Differentialgetriebe (1006) des Fahrzeugs (900, 900') positioniert ist.

12. Fahrzeug (900, 900') nach Anspruch 11, wobei der Fahrgestellquerträger (302) zwischen einem Getriebe (1002) und einer Sattelkupplung (1004) des Fahrzeugs (900, 900') positioniert ist.

13. Fahrzeug nach Anspruch 11, das ferner ein elektronisches Bremssystemmodul (420) umfasst, das an dem Batteriehalter (402) montiert ist.

14. Fahrgestellquerträger nach Anspruch 1, wobei die obere linke Montagehalterung (404A), die untere linke Montagehalterung (406A), die obere rechte Montagehalterung (404B) und die untere rechte Montagehalterung (406B) jeweils dazu konfiguriert sind, mindestens teilweise zwischen einer Außenfläche des Batteriehalters (402) und dem Fahrgestell (904) positioniert zu werden, um den Batteriehalter (402) fest daran zu montieren.

## Revendications

1. Traverse de châssis (302), comprenant :
un support de batterie (402) configuré pour monter au moins une batterie de véhicule (400, 400(1), 400(2)) sur un châssis (904) d'un véhicule et augmenter la rigidité de celui-ci, le support de batterie (402) comprenant un bac de batterie (408) comprenant un plancher (504), une paroi latérale avant (506), une paroi latérale arrière (508), et des plaques latérales (502A, 502B) s'étendant entre la paroi latérale avant (506) et la paroi latérale arrière (508), le support de batterie (408) étant conçu pour s'étendre entre un rail gauche (202A) et un rail droit (202B) du châssis (904) ;
un support de montage inférieur gauche (406A) et un support de montage supérieur gauche (404A) configurés chacun pour monter rigidement un côté gauche du support de batterie (402) sur une surface intérieure gauche (210A) du rail gauche (202A) du châssis (904), le support de montage inférieur gauche (406A) étant fixé à une partie inférieure du support de batterie (402) et le support de montage supérieur gauche (404A) étant fixé à un sommet du support de batterie (402) ;
un support de montage inférieur droit (406B) et un support de montage supérieur droit (404B) étant chacun conçus pour monter rigidement un côté droit du support de batterie (402) sur une surface intérieure droite (210B) du rail droit (202B) du châssis (904), le support de montage inférieur droit (406B) étant fixé au fond du support de batterie (402) et le support de montage supérieur droit (404B) étant fixé au sommet du support de batterie (402) ; et
un couvercle échelonnable (410) monté de manière amovible sur le support de batterie (408), le couvercle échelonnable (410) pouvant être monté lorsque le support de batterie (402) est monté sur le châssis (904) et étant configuré pour être posé par un utilisateur sans endommager l'au moins une batterie (400, 400(1), 400(2)) du véhicule lorsqu'elle est présente dans le support de batterie (408).

2. Traverse de châssis (302) selon la revendication 1, dans laquelle au moins l'une des plaques latérales (502A, 502B) comprend une ouverture de câble (532) pour acheminer un câble d'un intérieur (412) à un extérieur du support de batterie (402).

3. Traverse de châssis (302) selon la revendication 1, dans laquelle chaque plaque latérale (502A, 502B) des plaques latérales (502A, 502B) comprend une pluralité de brides (514B, 516B, 518B, 520B) qui se chevauchent au moins partiellement pour renforcer les coins des plaques latérales (502A, 502B).

4. Traverse de châssis (302) selon la revendication 1, dans laquelle le support de batterie (402) comprend en outre un trou de drainage (530) dans chaque coin du fond du support de batterie (402).

5. Traverse de châssis (302) selon la revendication 1, dans laquelle une hauteur de la traverse de châssis (302) est inférieure à une hauteur des rails gauche et droit (202A, 202B) du châssis (904).

6. Traverse de châssis (302) selon la revendication 1, dans laquelle le support de montage supérieur gauche (404A), le support de montage inférieur gauche (406A), le support de montage supérieur droit (404B) et le support de montage inférieur droit (406B) comprennent chacun une pluralité de trous de rivet (542, 550) s'étendant linéairement entre un avant et un arrière du support de batterie (402) ; et
le support de montage supérieur gauche (404A), le support de montage inférieur gauche (406A), le support de montage supérieur droit (404B) et le support de montage inférieur droit (406B) s'étendant chacun sur sensiblement toute la longueur des plaques latérales entre l'avant et l'arrière du support de batterie (402).

7. Traverse de châssis (302) selon la revendication 1, dans laquelle le support de montage inférieur gauche (406A) et le support de montage inférieur droit (406B) comprennent chacun au moins un gousset (548A, 548B).

8. Traverse de châssis (302) selon la revendication 1, dans laquelle chacun du support de montage inférieur droit (406B) et du support de montage inférieur gauche (406A) comprend en outre un trou de drainage (552) dans chaque coin.

9. Ensemble de traverse de châssis (300) comprenant la traverse de châssis (302) selon la revendication 1, dans lequel :
au moins une batterie de véhicule (400, 400(1), 400(2)) est installée sur le support de batterie (402) ; et
la traverse de châssis (302) comprend en outre un dispositif de retenue de batterie (414A, 414B) fixant de manière amovible l'au moins une batterie de véhicule (400, 400(1), 400(2)) au support de batterie (402).

10. Ensemble de traverse de châssis (300) selon la revendication 9,
dans lequel l'au moins une batterie de véhicule (400, 400(1), 400(2)) comprend une première batterie de véhicule (400(1)) et une seconde batterie de véhicule (400(2)), chaque batterie de véhicule (400(1), 400(2)) de la première batterie de véhicule (400(1)) et de la seconde batterie de véhicule (400(2)) ayant une forme rectangulaire avec deux parois latérales longues (416) et deux parois latérales courtes (418) ; et
l'une des deux parois latérales longues (416) de la première batterie de véhicule (400(1)) est positionnée de manière adjacente à l'une des deux parois latérales longues (416) de la seconde batterie de véhicule (400(2)).

11. Véhicule (900, 900') comprenant une traverse de châssis (302) selon la revendication 1 et un châssis (904) qui comprend un rail gauche (202A) et un rail droit (202B), dans lequel :
au moins une batterie de véhicule (400, 400(1), 400(2)) est installée sur le support de batterie (402) ; et
la traverse de châssis (302) est positionnée entre une boîte de vitesses (1002) et un différentiel (1006) du véhicule (900, 900').

12. Véhicule (900, 900') selon la revendication 11, dans lequel la traverse de châssis (302) est positionnée entre une boîte de vitesses (1002) et une cinquième roue (1004) du véhicule (900, 900').

13. Véhicule selon la revendication 11, comprenant en outre un module de système de freinage électronique (420) monté sur le support de batterie (402).

14. Traverse de châssis selon la revendication 1, dans laquelle le support de montage supérieur gauche (404A), le support de montage inférieur gauche (406A), le support de montage supérieur droit (404B) et le support de montage inférieur droit (406B) sont chacun configurés pour être au moins partiellement positionnés entre une surface extérieure du support de batterie (402) et le châssis (904) pour monter rigidement le support de batterie (402) sur celui-ci.
